# EUROPEAN PATENT SPECIFICATION

(11) **EP 3 913 251 B1**
(45) Date of publication and mention of the grant of the patent: **07.02.2024**
(21) Application number: 21174958.5
(22) Date of filing: 20.05.2021
(51) Int. Cl.: F16D 48/06

(54) **METHOD, COMPUTER PROGRAM AND SYSTEM FOR WEAR MONITORING OF A HYDRAULIC CLUTCH OF A VEHICULAR DRIVELINE**
VERFAHREN, COMPUTERPROGRAMM UND SYSTEM ZUR VERSCHLEISSÜBERWACHUNG EINER HYDRAULISCHEN KUPPLUNG EINES FAHRZEUGANTRIEBSSTRANGS
PROCEDE, PROGRAMME INFORMATIQUE ET SYSTÈME DE SURVEILLANCE DE L'USURE D'UN EMBRAYAGE HYDRAULIQUE D'UNE TRANSMISSION DE VÉHICULE

(30) Priority: 21.05.2020 IT 202000011818
(43) Date of publication of application: 24.11.2021
(73) Proprietor: CNH Industrial Italia S.p.A., 10156 Torino (IT)
(72) Inventor: Megna, Vincenzo, 41030 Bastiglia (MO) (IT); Melegari, Mario, 41126 Modena (IT); Morandi, Gabriele, 41125 Modena (IT); Trollini, Valerio, 06049 Spoleto (PG) (IT); Zanasi, Nicholas, 41013 Modena (MO) (IT)
(74) Representative: CNH Industrial IP Department

(56) References cited:
- DE-A1-102017 202 080
- US-A- 6 117 048
- US-A1- 2018 172 092

## Description

### Field of the invention

The present invention relates to a method of diagnosing the wear of a hydraulic clutch of a vehicle transmission comprising a pack of discs and more precisely of an agricultural vehicle.

### State of the art

There are methods of estimating the wear of a hydraulic clutch which is based on the measurement of the energy passed through the same organ, especially during the closing phases of the clutch itself. Examples can be found in US6117048A, US2018/172092A1, DE102017202080.

It is believed that this method is not reliable as there are too many approximations and it is not easy to verify the fulfilment of the optimal conditions for monitoring.

In fact, it is necessary to know the gear ratio, the mass of the vehicle and the inclination of the ground.

In the field of agricultural vehicles, the clutch of the transmission is made by means of a pack of discs, in which an input of the disc pack is connected to a first part of the transmission and an output opposite the first part is connected to the wheels and/or to a load in general. Therefore, the packing of the disc pack determines the interconnection of a first portion of the vehicle transmission with respect to a second portion of the same transmission.

If not specifically excluded in the detailed description that follows, what is described in this chapter is to be considered as an integral part of the detailed description.

### Summary of the invention

The object of the present invention is to propose a method for monitoring the state of wear of a hydraulic clutch.

The basic idea of the present invention is to monitor a pressure derivative in the piston actuation circuit that acts on the hydraulic clutch, measuring the time interval between a first instant, corresponding to the activation of the clutch engagement command hydraulic, and a second instant in which the pressure derivative assumes a second divergent trend.

Indeed, it has been discovered that in hydraulic drive systems, immediately after the activation of the clutch engagement command, there is a rapid increase of the pressure in the control circuit of the actuating piston, then a plateau corresponding to the displacement of the piston and a further rapid increase in pressure corresponding to the compression of the pack of discs that define the clutch or the piston end of the sliding displacement.

An electrical signal is associated with the pressure measurement. A processing unit calculates the derivative of the pressure measured in the piston actuation circuit and calculates a time interval that elapses between the first instant and the second instant. A gradual lengthening of the aforementioned interval indicates a gradual deterioration of the state of wear of the hydraulic clutch of the vehicle transmission.

Advantageously, the present method of measurement is independent of any hypothesis about the conditions of inflation of the wheels, the loading and inclination conditions of the vehicle.

The first instant is associated with the switching of a hydraulic circuit control switch or with a first divergent trend of the pressure derivative.

It has been discovered that the first divergent trend of the pressure derivative occurs after a fixed time interval from the switching of the hydraulic circuit activation command. Therefore, thanks to this discovery it has been understood that for the purpose of assessing the lengthening of the monitored time interval, it is irrelevant to detect the instant of activation of the hydraulic control activation command or the corresponding first divergence event of the pressure derivative.

The present invention finds application in the field of hydraulic clutches both in the case in which the clutch is engaged by compression by the hydraulic piston, and in the case in which the compression is performed by a spring, while the piston acts to disengage the clutch.

The invention is defined in the independent claims.

The dependent claims describe preferred variants of the invention.

### Brief description of the figures

Further objects and advantages of the present invention will become clear from the detailed description that follows of an example of embodiment of the same (and of its variants) and from the attached drawings given purely for explanatory and non-limiting purposes, in which:
Figure 1 shows a trend of the pressures as the state of wear of a hydraulic clutch of a vehicular transmission of a modified agricultural vehicle according to the method of the present invention;
Figure 2 shows an example of a driving circuit of a hydraulic clutch of a vehicle transmission, in particular of a modified agricultural vehicle according to the present invention;
Figure 3 shows an agricultural vehicle in which the hydraulic clutch of Figure 2 and the monitoring method of the present invention is implemented;
Figure 4 shows an exemplary flowchart of the method of the present invention, performed at an activation and/or deactivation of the hydraulic clutch.

The same numbers and the same reference letters in the figures identify the same elements or components.

In the context of this description, the term "second" component does not imply the presence of a "first" component. These terms are indeed used as labels to improve clarity and should not be intended as limiting.

The elements and characteristics illustrated in the various preferred embodiments, including the drawings, can be combined with each other as long as they remain within the scope of the protection of the present invention as defined in the appended claims.

### Detailed description of exemplary embodiments

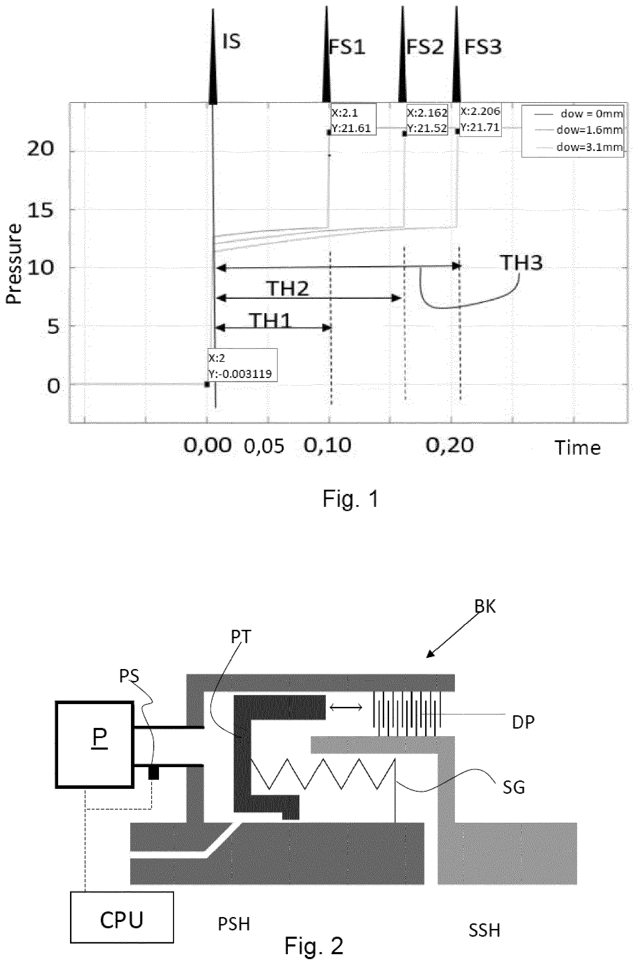

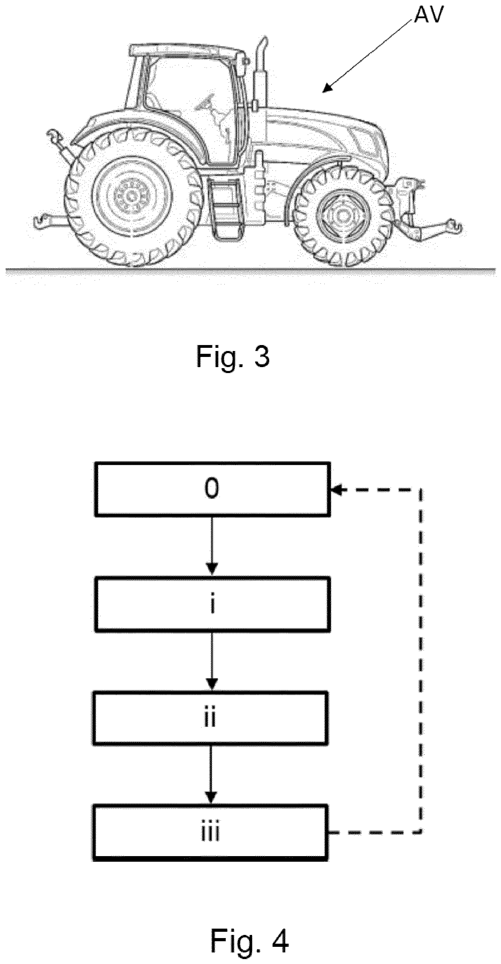

The present invention, with reference to Figures 2 and 3, relates to an agricultural vehicle AV equipped with a clutch BK equipped with a hydraulic circuit P for actuating it, in engagement or disengagement of the relative pack of discs DP.

In particular, the hydraulic circuit drives a piston PT configured to pack at least a pair of friction discs DP. Preferably, an spring SG opposes the packing to restore the opening of the clutch in depressurized conditions of the hydraulic circuit P.

Closing the clutch involves the mechanical rotatably connection of the driver shaft PSH with the driven shaft SSH.

A pressure sensor PS is installed on the circuit to convert a pressure signal into an electrical signal.

A CPU processing unit is operationally connected with the PS sensor and acquire a pressure trend within the hydraulic circuit at least during the engagement and/or disengagement of the hydraulic clutch, see figure 2.

With reference to figure 1, it has been observed that when the clutch is engaged (or disengaged), there is a sharp increase in pressure. Subsequently, during the displacement of the piston, the pressure remains approximately constant, defining a so-called plateau. When the piston acting on the pack of discs compresses it (or releases it), there is a further sharp increase in pressure.

In terms of derivative, a sharp increase in pressure may correspond to the Dirac delta.

Therefore, the pulses FS1, FS2, F3 are represented in the figures. These pulses represent an event that interrupts the measurement of the amplitude TH1, TH2, TH3, etc. of a time interval that begins approximately when the command to activate (or deactivate) the clutch BK is activated.

According to the present invention, the event that causes the start of the measurement of the amplitude of the time interval corresponds to the activation of the hydraulic control or to the corresponding IS divergence of the derivative of the pressure signal.

Generally, the engagement command is electro-actuated by means of a valve that has its own inertia and therefore a fairly stable delay with respect to the activation of the command. Therefore, it is equivalent to start the measurement of the aforementioned amplitude of the time interval when the activation signal, electric, is detected or when, a few tenths of seconds later, the first IS spike occurs.

The plateau pattern is a primary feature of the hydraulic circuit. In fact, the mobile piston designed to compress the friction elements of the clutch BK is moved by the pumping of hydraulic fluid, generally hydraulic oil, with a limited power proportional to the flow rate for the generated pressure.

Therefore, the monitoring method object of the present invention provides for the execution in succession (see figure 4):
- i a first step of acquiring, on the occasion of the engagement (or disengagement) of the hydraulic clutch, a derivative of a signal representative of a pressure in a relative clutch actuation circuit,
- ii a second step of measuring a time interval TH2, TH3, etc .. elapsing between the first instant IS, corresponding to the activation of the clutch engagement command, and a second instant FS1, FS2, FS3, etc. wherein the pressure derivative assumes a second divergent trend and
- iii a third step of comparing the time interval TH2, TH3, etc .. with a predetermined TH1 threshold.

The threshold TH1 is obtained by means of a first preliminary execution of the first and second steps, namely when the clutch is new, for example as the average of time interval amplitudes acquired on the same vehicle during the first engagements (or disengages) of the clutch. For this reason, this threshold TH1 is indicated with a similar notation with respect to the amplitude of the monitored time interval to determine the state of wear of the clutch.

The present invention can advantageously be carried out by means of a computer program which comprises coding means for the realization all steps of the method, when this program is executed on a computer. Therefore, it is understood that the scope of protection extends to said computer program and further to computer readable means which comprise a recorded program, said computer readable means comprising program coding means for carrying out all steps of the method, when said program is run on a computer.

Implementing variations to the non-limiting example described are possible, as long as they remain within the scope of protection of the present invention, as defined in the claims.

From the above description, the skilled in the art is able to realize the object of the invention without introduction of further details.

## Claims

1. Method for wear monitoring of a hydraulic clutch (BK) of a vehicular driveline (PSH, SSH) comprising in succession (i) a first step of acquiring, at engagement and/or disengagement of the hydraulic clutch, a derivative of a signal representative of a pressure in a corresponding actuation circuit (P) of the hydraulic clutch, (ii) a second step of measurement of a time interval (TH2, TH3, etc..) elapsing between a first instant (IS), corresponding to the activation of the engagement command of the clutch, and a second instant (FS1, FS2, FS3) wherein the derivative of said signal assumes a second divergent trend and (iii) a third step of comparing said time interval (TH2, TH3, etc..) with a predetermined threshold (TH1),
the method is **characterized in that** it further comprises a preliminary step of setting as a predetermined threshold (TH1) said time interval obtained by means of a first preliminary execution of the first and second steps, namely when the clutch is new.

2. Method according to claim 1, wherein the first instant (IS) is associated with the switching of a control switch of the hydraulic circuit or with a first divergent trend of the derivative of the signal representative of the pressure.

3. Method according to claim 2, wherein said derivative is calculated by implementing a processing unit suitably configured to acquire at least said signal representative of the pressure.

4. Computer program comprising program coding means carrying out all steps of any one of claims 1 to 3, when said program is run on a computer.

5. Computer readable means comprising a recorded program, said computer readable means comprising program coding means suitable for carrying out all steps of any one of claims 1 to 3, when said program is run on a computer.

6. Wear monitoring system of a hydraulic clutch of a vehicle transmission comprising
- a pressure sensor associated with a hydraulic circuit for operating the hydraulic clutch,
- a processing unit operatively connected with the pressure sensor and configured to carry out all the steps of any one of claims 1 to 3.

7. Agricultural vehicle (AV) comprising a hydraulic clutch of a related vehicle transmission and equipped with a hydraulic clutch wear monitoring system according to claim 6.

## Patentansprüche

1. Verfahren zur Verschleißüberwachung einer hydraulischen Kupplung (BK) eines Fahrzeuggetriebes (PSH, SSH), wobei das Verfahren aufeinanderfolgend aufweist: (i) einen ersten Schritt des Erfassens, bei einem Einrücken und/oder einem Ausrücken der hydraulischen Kupplung, einer Ableitung eines Signals, das kennzeichnend für einen Druck in einem zugehörigen Betätigungskreislauf (P) der hydraulischen Kupplung ist, (ii) einen zweiten Schritt des Messens eines Zeitintervalls (TH2, TH3, etc.), das zwischen einem ersten Zeitpunkt (IS), der zugehörig zu der Ansteuerung des Einrückbefehls der Kupplung ist, und einem zweiten Zeitpunkt (FS1, FS2, FS3), in dem die Ableitung des Signals einen zweiten divergierenden Trend einschlägt, verstreicht, und (iii) einen dritten Schritt eines Vergleichens des Zeitintervalls (TH2, TH3, etc.) mit einem vorbestimmten Grenzwert (TH1),
wobei das Verfahren **dadurch gekennzeichnet ist, dass** es des Weiteren einen vorläufigen Schritt des Festlegens des Zeitintervalls, das mittels einer ersten vorläufigen Ausführung des ersten und des zweiten Schritts erhalten wird, nämlich wenn die Kupplung neu ist, als vorbestimmten Grenzwert (TH1) aufweist.

2. Verfahren nach Anspruch 1, wobei der erste Zeitpunkt (IS) zugehörig zu dem Schalten eines Steuerungsschalters des Hydraulikkreislaufs oder zu einem ersten divergierenden Trend der Ableitung des Signals, das kennzeichnend für den Druck ist, ist.

3. Verfahren nach Anspruch 2, wobei die Ableitung durch Implementierung einer Verarbeitungseinheit berechnet wird, die in geeigneter Weise dazu ausgebildet ist, mindestens das für den Druck kennzeichnende Signal zu erfassen.

4. Computerprogramm mit einem Programmkodierungsmittel, das alle Schritte nach einem der Ansprüche 1 bis 3 ausführt, wenn das Programm auf einem Computer ausgeführt wird.

5. Computerlesbares Medium mit einem gespeicherten Programm, wobei das computerlesbare Medium ein Programmkodierungsmittel aufweist, das dazu ausgebildet ist, alle Schritte nach einem der Ansprüche 1 bis 3 auszuführen, wenn das Programm auf einem Computer ausgeführt wird.

6. Verschleißüberwachungssystem für eine hydraulische Kupplung eines Fahrzeuggetriebes mit:
- einem Drucksensor, der zugehörig zu einem Hydraulikkreislauf zum Betreiben der hydraulischen Kupplung ist,
- einer Verarbeitungseinheit, die wirkend mit dem Drucksensor verbunden ist und die dazu eingerichtet ist, alle Schritte nach einem der Ansprüche 1 bis 3 auszuführen.

7. Landwirtschaftliches Fahrzeug (AV), das eine hydraulische Kupplung eines damit verbundenen Fahrzeuggetriebes aufweist und mit einem hydraulischen Kupplungs-Verschleißüberwachungssystem nach Anspruch 6 ausgestattet ist

## Revendications

1. Procédé de surveillance de l'usure d'un embrayage hydraulique (BK) d'une ligne d'arbres de transmission d'un véhicule (PSH, SSH) comprenant successivement (i) une première étape d'acquisition, à l'engagement et/ou au désengagement de l'embrayage hydraulique, d'une dérivée d'un signal représentatif d'une pression dans un circuit d'actionnement correspondant (P) de l'embrayage hydraulique, (ii) une deuxième étape de mesure d'un intervalle de temps (TH2, TH3, etc.) s'écoulant entre un premier instant (IS), correspondant à l'activation de la commande d'engagement de l'embrayage, et un second instant (FS1, FS2, FS3) où la dérivée dudit signal prend une seconde tendance divergente et (iii) une troisième étape de comparaison dudit intervalle de temps (TH2, TH3, etc.) avec un seuil prédéterminé (THI), le procédé est **caractérisé en ce qu'**il comprend en outre une étape préliminaire consistant à fixer comme seuil prédéterminé (THI) ledit intervalle de temps obtenu au moyen d'une première exécution préliminaire des première et deuxième étapes, à savoir lorsque l'embrayage est neuf.

2. Procédé selon la revendication 1, dans lequel le premier instant (IS) est associé à la commutation d'un interrupteur de commande du circuit hydraulique ou à une première tendance divergente de la dérivée du signal représentatif de la pression.

3. Procédé selon la revendication 2, dans lequel ladite dérivée est calculée par la mise en oeuvre d'une unité de traitement convenablement configurée pour acquérir au moins ledit signal représentatif de la pression.

4. Programme informatique comprenant des moyens de codage de programme réalisant toutes les étapes de l'une des revendications 1 à 3, lorsque ledit programme est exécuté sur un ordinateur.

5. Moyens lisibles par un ordinateur comprenant un programme enregistré, lesdits moyens lisibles par ordinateur comprenant des moyens de codage de programme pour réaliser toutes les étapes de l'une des revendications 1 à 3, lorsque ledit programme est exécuté sur un ordinateur.

6. Système de surveillance de l'usure d'un embrayage hydraulique d'une transmission de véhicule comprenant
- un capteur de pression associé à un circuit hydraulique pour actionner l'embrayage hydraulique,
- une unité de traitement reliée de manière opérationnelle au capteur de pression et configurée pour effectuer toutes les étapes de l'une des revendications 1 à 3.

7. Véhicule agricole (VA) comprenant un embrayage hydraulique d'une transmission de véhicule connexe et équipé d'un système de surveillance de l'usure de l'embrayage hydraulique selon la revendication 6.
